# EUROPÄISCHE PATENTANMELDUNG

(11) **EP 1 077 156 A1**
(43) Veröffentlichungstag der Anmeldung: **21.02.2001**
(21) Anmeldenummer: 00117566.0
(22) Anmeldetag: 16.08.2000
(51) Int. Cl.: B60N 2/48

(54) **Kopfstütze für ein Fahrzeug**

(30) Priorität: 16.08.1999 DE 19938170
(71) Anmelder: DaimlerChrysler AG, 70567 Stuttgart (DE)
(72) Erfinder: Linhard, Klaus, 89601 Schelkingen (DE); Schaller, Gerhard, 86150 Augsburg (DE)

(57) **Zusammenfassung**

Um in einem Fahrzeug eine gute Beschallung verschiedener Sitzpositionen ermöglichen zu können, ist erfindungsgemäß eine Kopfstütze (1) mit einer integrierten Lautsprecheranordnung (2) mit wenigstens einem Lautsprecher (4) vorgesehen.

## Beschreibung

Die Erfindung betrifft eine Kopfstütze für ein Fahrzeug, insbesondere für einen Personenkraftwagen.

Üblicherweise ist für eine akustische Wiedergabe im Fahrzeug, insbesondere im Personenkraftwagen, eine Lautsprecheranordnung mit einer Mehrzahl von Lautsprechern vorgesehen, die beispielsweise im Fußraum, in Türen, in Ablagen oder im Armaturenbrett angeordnet sind. Dabei sind die für niedrige Frequenzen ausgelegten Lautsprecher, welche ein besonders großes Volumen aufweisen und als geschlossene Lautsprecher ausgeführt sind, vornehmlich im Fußraum oder in Ablagen angeordnet. Die für hohe Frequenzen ausgelegten Lautsprecher sind zur Erzielung einer vorgebbaren Richtwirkung, insbesondere in Richtung vom Kopfbereich von im Fahrzeug sitzenden Personen, beispielsweise im Armaturenbrett angeordnet.

Derzeit nehmen die Ansprüche der Insassen an die akustischen Eigenschaften eines Fahrzeugs zu, darüber hinaus nimmt das akustische Unterhaltungs- und Informationsangebot zu, indem dieses z.B. mit elektronischen Diensten, wie Navigationssystem mit Sprachbedienung, e-mail-System mit Sprachausgabe, verbunden wird. Somit ist die akustische Wiedergabe nicht mehr nur beschränkt auf eine Radiowiedergabe oder eine Freisprechanlage, z.B. für ein Funktelefon. Nachteilig bei den bisher eingesetzten Lautsprecheranordnungen ist, daß diese relativ weit von den zu beschallenden Positionen, z.B. Sitzplätze der Insassen, entfernt sind. Darüber hinaus eignen sich diese Lautsprecheranordnungen lediglich zu einer großflächigen Beschallung. Somit ist für Insasssen auf akustisch ungünstigen Positionen eine Benutzung der akustischen Systeme sehr begrenzt. Auch ist eine besonders gleichmäßige Beschallung aller in dem Fahrzeug sitzenden Insassen kaum ermöglicht.

Der Erfindung liegt daher die Aufgabe zugrunde, eine Lautsprecheranordnung anzugeben, welche eine gute Beschallung für die jeweilige Sitzposition im Fahrzeug ermöglicht.

Die Aufgabe wird erfindungsgemäß gelöst durch eine Kopfstütze für ein Fahrzeug mit einer integrierten Lautsprecheranordnung mit wenigstens einem Lautsprecher.

Die Erfindung geht dabei von der Überlegung aus, daß für die individuell akustischen Bedürfnisse eines jeden Insassen in einem Fahrzeug, insbesondere in einem Personenkraftwagen, an der jeweiligen Position, insbesondere an der Sitzposition, eine möglichst individuelle akustische Wiedergabe ermöglicht sein sollte. Dies ist besonders vorteilhaft durch den Einbau einer Lautsprecheranordnung in der Kopfstütze der jeweiligen Sitzposition ermöglicht. Somit wird der Insasse in unmittelbarer Nähe des Kopfbereichs individuell durch die zugehörige Lautsprecheranordnung akustisch beschallt. Allerdings sollte trotz integrierter Lautsprecheranordnung die Schutzfunktion der Kopfstütze erhalten bleiben. Dazu ist die integrierte Lautsprecheranordnung bevorzugtermaßen möglichst kompakt ausgeführt, so daß ihre Bauform zum einen die Stabilität der Kopfstütze unterstützt und zum anderen auch eine Baßwiedergabe ermöglicht.

Zweckmäßigerweises ist an der Schallaustrittsöffnung des Lautsprechers ein Resonanzkörper angeordnet. Durch die gemeinsame Anordnung von Lautsprecher und Resonanzkörper ist eine hinreichende Baßwiedergabe bei möglichst kompakter Bauform ermöglicht. Vorzugsweise ist der Resonanzkörper in Form eines Horns ausgeführt. Diese gemeinsame Anordnung aus Lautsprecher und Resonanzkörper wird auch als Hornlautsprecher bezeichnet. Der das Horn bildende Resonanzkörper übernimmt dabei akustisch mehrere Funktionalitäten, wie beispielsweise Schallfuhrung, Vermeidung eines akustischen Kurzschlusses und Verstärkung des Schallpegels bei der Resonanzfrequenz. Insbesondere ermöglicht der Resonanzkörper auch eine Baßwiedergabe. Darüber hinaus übernimmt der Resonanzkörper gleichzeitig eine Stabilisierungsfunktion des Rahmens der Kopfstütze. Somit erfüllt der Resonanzkörper eine Doppelfunktion - akustisch und mechanisch.

Vorteilhafterweise ist der Resonanzkörper innenberippt. Hierdurch ist eine akustische Verzerrung vermieden. Darüber hinaus trägt die Innenberippung zur Steifheit und Stabilität des Resonanzkörpers und demzufolge auch zur Stabilität der Kopfstütze bei.

Für eine besonders kompakte Ausführungsform der Kopfstütze weist der Resonanzkörper im wesentlichen einen schmalen Querschnitt auf. Durch den relativ flach ausgeführten Querschnitt steht hinreichend Raum für eine Polsterung des Resonanzkörpers mit Schaumstoff zur Verfügung, wodurch eine für den Insassen bequeme und dämpfende Kopfstütze gewährleistet ist. Bevorzugt ist die Lautsprecheranordnung zumindest teilweise, insbesondere ist der Resonanzkörper weitgehend vollständig, von einer Dämmschicht umgeben. Diese z.B. als Schaumstoffpolsterung ausgeführte Dämmschicht trägt zusätzlich zu der akustischen Eigenschaft des Resonanzkörpers zur Vermeidung des akustischen Kurzschlusses bei - akustische Funktion. Dabei wirkt die Dämmschicht akustisch wie eine halbdurchlässige Box. Die Länge, das Material und die Dichte der Dämmschicht tragen dabei wesentlich zur Schallführung bei, insbesondere zu einem ausgeglichen Frequenzverlauf.

Vorzugsweise ist der Resonanzkörper in mindestens zwei Raumbereiche unterteilt, wobei der unmittelbar an den Lautsprecher anschließende Raumbereich konisch in Schallrichtung im Querschnitt abnimmt. Durch eine derartige Verjüngung des Querschnitts des Resonanzkörpers in Schallrichtung ergibt sich eine hinreichend breitbandige Resonanzstelle. Bei gleichem Querschnitt des Resonanzkörpers ist alternativ eine ausgeprägte schmale Resonanz bei besonders geringer Bandbreite ermöglicht. Vorteilhafterweise weist der Resonanzkörper im Querschnitt an seiner Schalleintrittsöffnung eine Breite von weniger als 6 cm und an seiner Schallaustrittsöffnung von weniger als 2 cm auf.

In vorteilhafter Ausführung unterscheidet sich in den beiden Raumbereichen die jeweilige Anzahl der Innenrippen. Je nach Art und Intensität der Beschallung sowie Stabilitätsfunktion des Resonanzkörpers können weitere Raumbereiche mit jeweils unterschiedlicher Anzahl von Innenrippen vorgesehen sein. Zusätzlich können zur Erhöhung der Stabilität auch Außenrippen vorgesehen sein.

Zweckmäßigerweise weist der Resonanzkörper eine Länge von weniger als 18 cm auf. Bevorzugt hat der Resonanzkörper dabei eine Breite von weniger als 19 cm. Hierdurch ist bei in etwa gleicher Baugröße einer konventionellen Kopfstütze eine hinreichend gute Stabilität der Kopfstütze gewahrt. Darüber hinaus kann die mechanische Stabilität des Resonanzkörpers durch Materialart, Dicke, Anzahl und Art der Versteifungsrippen (Innen- und/oder Außenrippen) erhöht werden. Bevorzugt ist der Resonanzkörper aus Kunststoff. Dabei kann ein derartig ausgeführter Resonanzkörper die Kunststoffschale einer herkömmlichen Kopfstütze ersetzen, wodurch eine besonders kompakte Ausführung der Lautsprecheranordnung und daraus resultierend der Kopfstütze erreicht ist.

Vorzugsweise ist die Lautsprecheranordnung an Stützen der Kopfstütze befestigt. Zusätzlich ist die Lautsprecheranordnung vorteilhafterweise mittels einer Platte flächig an den Stützen befestigt. Als besonders vorteilhaft hat sich als Lautsprecher ein offener Lautsprecher erwiesen. Hierdurch ist eine besonders kompakte Ausführung der Lautsprecheranordnung ermöglicht. Durch die auch die Lautsprecheranordnung zumindest teilweise umgebende Dämmschicht ist der Lautsprecher in der Art einer halboffenen Box ausgeführt. D.h. die aus der Dämmschicht resultierende Dämpfung verbessert die akustischen Eigenschaften des Lautsprechers gegenüber einen herkömmlich offenen Lautsprecher. Zweckmäßigerweise ist als Lautsprecher ein Kolbenlautsprecher vorgesehen. Der Kolbenlautsprecher ist besonders für eine Baß-Wiedergabe geeeignet.

Für eine besonders gute akustische Baß-Wiedergabe ist der Lautsprecher zur Benutzung im Frequenzbereich von ca. 100 Hz bis ca. 200 Hz, insbesondere bis 400 Hz, vorgesehen. Dieser Frequenzbereich ist durch die akustischen Eigenschaften des Resonanzkörpers ermöglicht - Resonanzeigenschaft und weitestgehende Vermeidung des akustischen Kurzschlusses. Zweckmäßigerweise ist der Resonanzkörper dabei derart ausgelegt, daß eine Resonanz bei der Wellenlänge auftritt, die der vierfachen Länge des Schallwegs im Resonanzkörper entspricht. Der Resonanzkörper weist bevorzugt durch seine Bauform eine derartige Schallführung auf, daß eine Schallüberhöhung beispielsweise bei ca. 130 Hz und/oder 400 Hz auftritt. Je nach Vorgabe können auch andere Werte erreicht werden.

Durch die besonders kompakte Ausführung der Kopfstütze mit integrierter Lautsprecheranordnung sowie durch die besonders guten akustischen Eigenschaften dieser Lautsprecheranordnung eignet sich die Kopfstütze insbesondere zum Einbau in einem Fahrzeugsitz. Darüber hinaus ist vorteilhaft ein Fahrzeug, insbesondere ein Personenkraftwagen, mit einer derartigen Kopfstütze ausgerüstet.

Die mit der Erfindung erzielten Vorteile bestehen insbesondere darin, daß durch die Integration der Lautsprecheranordnung mit einem breiten niedrigen Frequenzbereich und besonders kompakter Ausführung in die Kopfstütze eines Fahrzeugsitzes eine individuelle Nahfeld-Akustik für den betreffenden Fahrzeugsitzbereich ermöglicht ist. Dabei ist die Lautsprecheranordnung derart aufgebaut, daß die Stabilisierungsfunktion der Kopfstütze gewährleistet, sowie eine hinreichend gute Baß-Wiedergabe ermöglicht ist, und daß ferner die Kopfstütze eine hinreichend kleine Baugröße aufweist.

Ausführungsbeispiele der Erfindung werden anhand einer Zeichnung näher erläutert. Darin zeigen:
- FIG 1: schematisch eine Kopfstütze mit einer integrierten Lautsprecheranordnung im Längsschnitt,
- FIG 2: schematisch die Lautsprecheranordnung gemäß Figur 1 in Vorderansicht,
- FIG 3: schematisch die Kopfstütze gemäß Figur 1 im Querschnitt,
- FIG 4: schematisch eine Kopfstütze mit einer modifizierten Lautsprecheranordnung im Langsschnitt,
- FIG 5: schematisch die Lautsprecheranordnung gemäß Figur 4 in Vorderansicht,
- FIG 6: schematisch die Kopfstütze gemäß Figur 4 im Querschnitt,
- FIG 7: ein Diagramm für den Gewinn in Abhängigkeit vom Frequenzgang einer integrierten Lautsprecheranordnung ohne Resonanzkörper,
- FIG 8: ein Diagramm für den Gewinn in Abhängigkeit vom Frequenzgang einer integrierten Lautsprecheranordnung mit einem offenen Lautsprecher und einem Resonanzkörper,
- FIG 9: ein Diagramm für den Frequenzgang einer integrierten Lautsprecheranordnung mit einem geschlossenen Lautsprecher und einem Resonanzkörper,
- FIG 10- 13: ein Diagramm für den Frequenzgang einer integrierten Lautsprecheranordnung mit einem offenen Lautsprecher und jeweils differenziertem Resonanzkörper.

Gleiche Teile sind in allen Figuren mit den gleichen Bezugszeichen versehen.

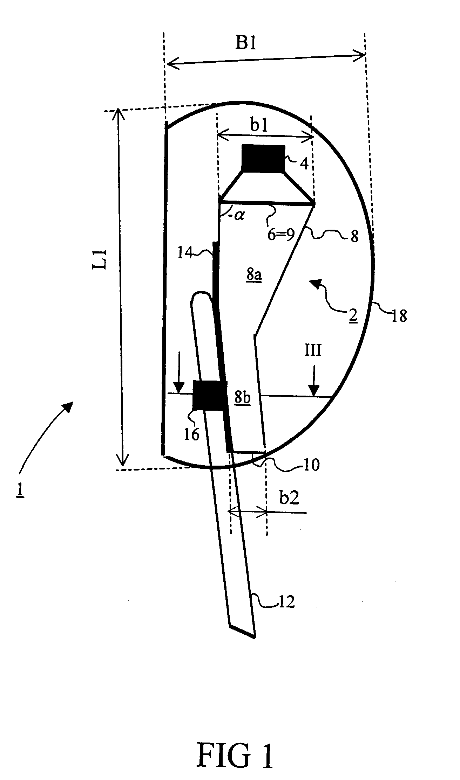

Figur 1 zeigt schematisch eine Kopfstütze 1 mit einer integrierten Lautsprecheranordnung 2 im Längsschnitt. Die Lautsprecheranordnung 2 umfaßt einen Lautsprecher 4, an welchen sich an dessen Schallaustrittsöffnung 6 ein Resonanzkörper 8 anschließt. Als Lautsprecher 4 dient insbesondere ein offener Lautsprecher, z.B. ein Kolbenlautsprecher. Alternativ kann ein geschlossener Lautsprecher verwendet werden.

Der Resonanzkörper 8 ist als ein Horn ausgeführt und in zwei Raumbereiche 8a und 8b unterteilt. Dabei nimmt der unmittelbar an den Lautsprecher 4 anschließende Raumbereich 8a konisch in Schallrichtung im Querschnitt ab. Bevorzugt weist der Resonanzkörper 8 einen schmalen Querschnitt auf, d.h. seine Schalleintrittsöffnung 9, die sich unmittelbar an die Schallaustrittsöffnung 6 des Lautsprechers 4 anschließt, hat eine Breite b1 von weniger als 6 cm. An seiner Schallaustrittsöffnung 10 weist der Resonanzkörper 8 eine Breite b2 von weniger als 2 cm auf. Darüber hinaus ist der Resonanzkörper 8 aus Kunststoff gebildet. Somit wird die in einer herkömmlichen Kopfstütze verwendete Kunststoffschale bei der vorliegenden Erfindung durch den aus Kunststoff geformten Resonanzkörper 8 ersetzt. Alternativ kann der Resonanzkörper 8 auch aus Holz geformt sein.

Die Lautsprecheranordnung 2 ist an wenigstens eine Stütze 12 der Kopfstütze 1 befestigt. Beispielsweise ist die Stütze 12 als Metallbügel ausgeführt, der in eine nicht dargestellte Rückenlehne des Fahrsitzes einfuhrbar ist. Zur Befestigung der Lautsprecheranordnung 2 ist an dem Resonanzkörper 8 eine Platte 14 angeordnet, die mindestens ein Befestigungselement 16 aufweist, welches beispielsweise ringförmig ausgeführt ist und somit auf die Stütze 12 aufgeschoben werden kann. Alternativ kann das Befestigungselement 16 auch direkt an den Resonanzkörper 8 angeordnet sein. Die Platte 14 ist beispielsweise eine Aluminium- oder Kunststoffplatte.

Die Lautsprecheranordnung 2 ist zumindest teilweise von einer Dämmschicht 18 umgeben, die insbesondere aus einem Schaumstoffpolster gebildet ist. Die Kopfstütze 1 weist dabei eine Gesamtlänge L1 von etwa 22 cm und eine Gesamtbreite B1 von etwa 12 cm auf. Dies ist nur eine beispielhafte Ausführungsform. Insbesondere können die Gesamtlänge L1 und die Gesamtbreite B1 der Kopfstütze 1 in Abhängigkeit von der Baugröße der integrierten Lautsprecheranordnung 2 variieren.

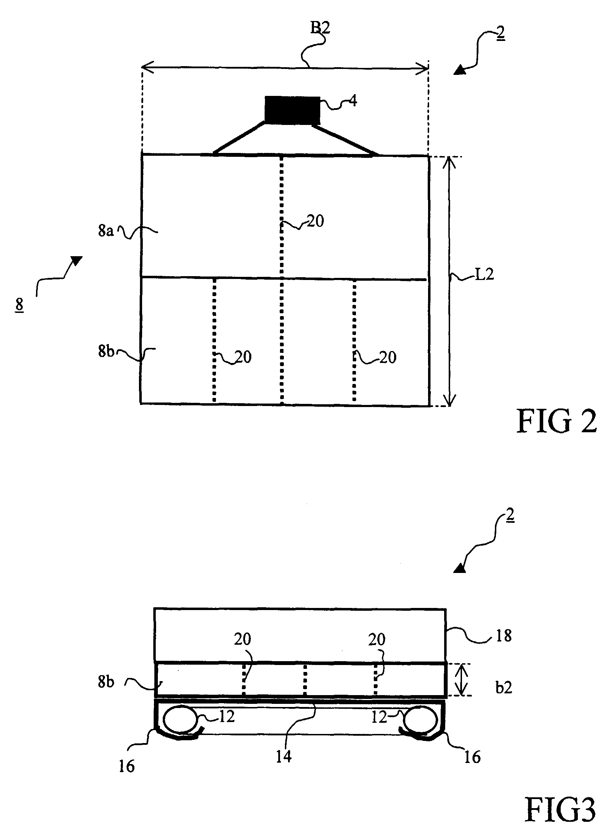

Figur 2 zeigt schematisch die Lautsprecheranordnung 2 gemäß Figur 1 in Vorderansicht mit dem Lautsprecher 4 und den beiden daran anschließenden Raumbereichen 8a und 8b des Resonanzkörpers 8. Zur Versteifung des Resonanzkörpers 8 weist dieser in den jeweiligen Raumbereichen 8a und 8b wenigstens eine Innenrippe 20 auf. Beispielsweise weist der erste Raumbereich 8a eine Innenrippe 20 und der zweite Raumbereich 8b drei Innenrippen 20 auf. Die Innenrippen 20 dienen neben der Versteifung und Festigkeit des Resonanzkörpers 8 auch der Vermeidung von akustischen Verzerrungen. Bevorzugt weist der Resonanzkörper 8 eine Länge L2 von weniger als 18 cm und eine Breite B2 von weniger als 19 cm auf.

Figur 3 zeigt schematisch die Kopfstütze 1 gemäß Figur 1 im Raumbereich 8b im Querschnitt. Dabei ist der Raumbereich 8b mit den drei Innenrippen 20 zumindest teilweise von der Dämmschicht 18 umgeben. Der Raumbereich 8b ist an die Platte 14 befestigt, welche mittels der Befestigungselemente 16 an die als Metallbügel ausgeführten Stützen 12 fixiert ist. Der Raumbereich 8b weist in dieser beispielhaften Ausführungsform eine Breite b2 von ca. 1,5 cm auf.

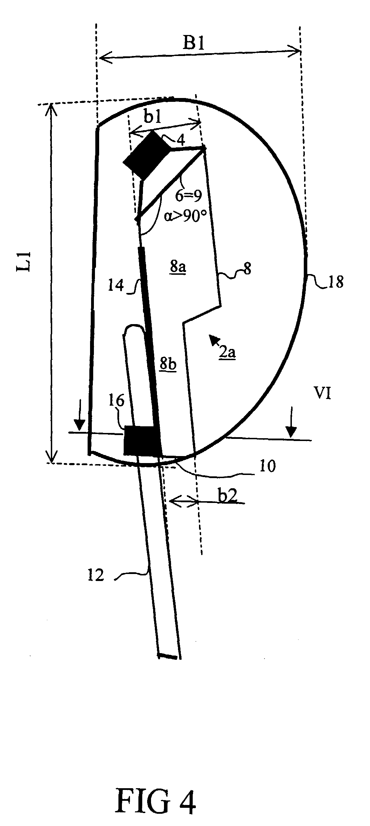

Figur 4 zeigt schematisch eine Kopfstütze 1 mit einer modifizierten Lautsprecheranordnung 2a im Längsschnitt. Dabei ist der Lautsprecher 4 mit einem Neigungswinkel α von mehr als 90° auf den Resonanzkörper 8 aufgesetzt. Insbesondere weist der Raumbereich 8a des Resonanzkörpers 8 anstelle eines konisch abnehmenden Querschnitts einen in Schallrichtung in etwa gleichbleibenden Querschnitt auf. Durch diesen gleichbleibenden Querschnitt des Resonanzkörpers 8 ergibt sich für die Lautsprecheranordnung 2a bevorzugt eine schmalbandige Resonanz. Je nach Art und Intensität der Beschallung der der Kopfstütze 1 zugehörigen Sitzposition kann der Lautsprecher 4 mit verschiedenen Neigungswinkeln α auf den Resonanzkörper 8 aufgesetzt sein. Darüber hinaus ist die Schallführung auch durch das Material, die Größe und die Form des Resonanzkörpers 8 sowie durch die diesen umgebende Dämmschicht 18, insbesondere durch Dicke, Dichte und Material der Dämmschicht 18, bestimmt. Die Breite b1 des Raumbereichs 8a beträgt vorzugsweise etwa 4 cm. Die Kopfstütze 1 umfaßt die Stütze 12, an welche die Platte 14 mittels der Befestigungselemente 16 befestigt ist. An die Platte 14 ist der Resonanzkörper 8 angeordnet. Die Lautsprecheranordnung 2a ist darüber hinaus zumindest teilweise von der Dämmschicht 18 umgeben.

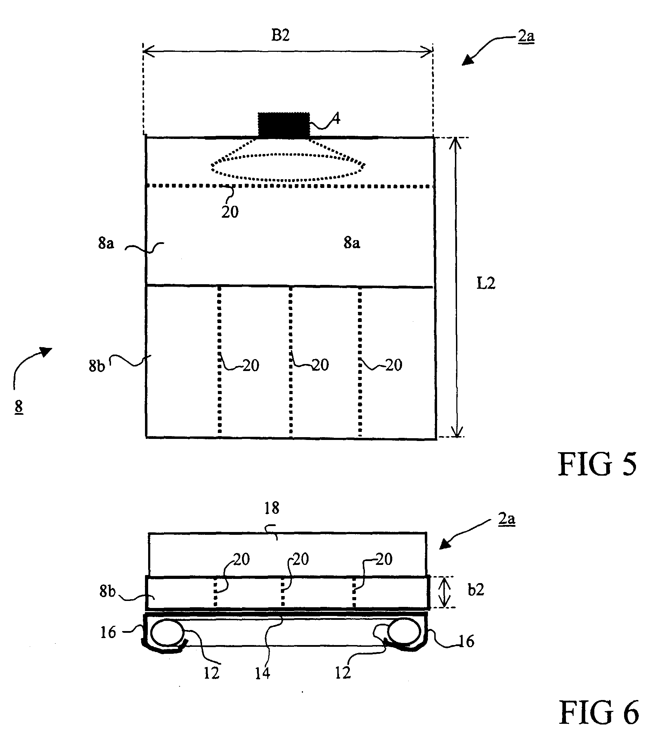

Gemäß Figur 5 weist der Raumbereich 8a der modifizierten Lautsprecheranordnung 2a gemäß Figur 4 keine Innenrippen 20 auf. Der Raumbereich 8b umfaßt demgegenüber drei Innenrippen 20. Um eine akustische Verzerrung zu vermeiden, sind diese Innenrippen 20 bevorzugt im etwa gleichen Abstand zueinander angeordnet. Die Länge L2 und die Breite B2 des Resonanzkörpers 8 dieser Lautsprecheranordnung 2a beträgt jeweils weniger als 18 cm.

Die Figur 6 zeigt schematisch die Kopfstütze 1 gemäß Figur 4 im Querschnitt. Dabei beträgt die Breite b2 des Querschnitts des Raumbereichs 8b weniger als 2cm. Der Raumbereich 8b ist frontseitig von der Dämmschicht 18 bedeckt. Rückseitig ist der Raumbereich 8b an die Platte 14 angeordnet, welche mit den Befestigungselementen 16 an den Stützen 12 befestigt ist.

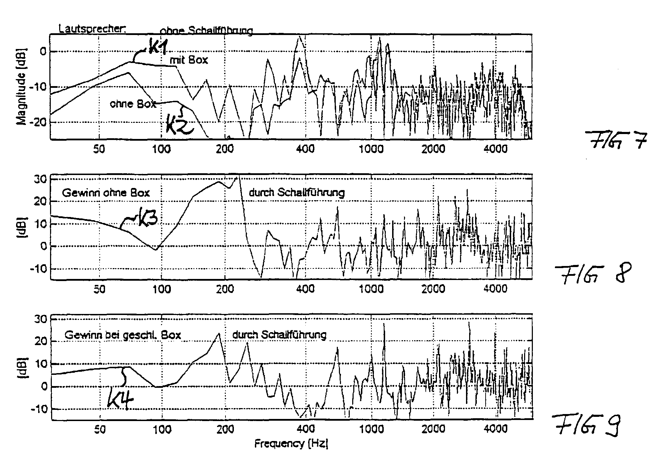

In Figur 7 ist ein Diagramm für den Gewinn abhängig vom Frequenzgang einer integrierten Lautsprecheranordnung 2 ohne Resonanzkörper 8 und demzufolge ohne Schallführung dargestellt. Dabei zeigt die eine Kurve K1 den Verlauf für den Frequenzgang bei einer Lautsprecheranordnung 2 mit einem geschlossenen Lautsprecher 4. Die zweite Kurve K2 zeigt den Verlauf für den Frequenzgang bei einer Lautsprecheranordnung 2 mit einem offenen Lautsprecher 4. Beim Vergleich der Kurve K1 mit der Kurve K2 ist zu erkennen, daß bei einem geschlossenen Lautsprecher 4 (Kurve K1) eine Gewinn von ca. 2 bis 15 dB im Frequenzbereich von 100 bis 400 Hz gegenüber dem offenen Lautsprecher 4 (Kurve K2) gegeben ist. Der geschlossene Lautsprecher 4 wies in diesem Beispiel ein Gehäusevolumen von ca. 1,71 auf.

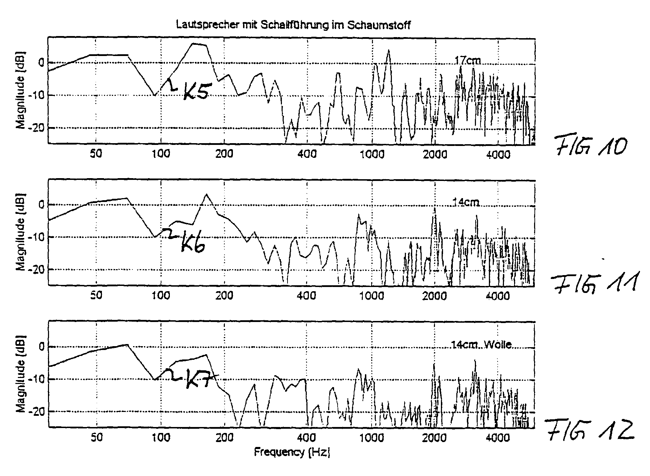

In den Figuren 8 und 9 wird der Gewinn für den Frequenzgang durch Schallführung jeweils in einem Diagramm dargestellt. Dabei ist in Figur 8 eine Kurve K3 dargestellt, die den Gewinn für den Frequenzgang bei einer integrierten Lautsprecheranordnung 2 mit einem offenen Lautsprecher 4 und einem Resonanzkörper 8 zeigt. Der Gewinn beträgt gegenüber einer Lautsprecheranordnung 2 ohne Schallführung für bestimmte Frequenzen bis zu 30 dB, z.B. bei einer Frequenz von ca. 200 Hz.

In der Figur 9 beschreibt die Kurve K4 den Gewinn für den Frequenzgang einer integrierten Lautsprecheranordnung 2 mit einem geschlossenen Lautsprecher 4 und einem zur Schallführung vorgesehenen Resonanzkörper 8. Dabei ist gegenüber der Kurve K3 der Figur 8 nochmals ein Gewinn im Frequenzgang zu verzeichnen. Der Gewinn im Frequenzgang gemäß den Figuren 8 und 9 infolge Schallführung der Lautsprecheranordnung 2 ist durch die akustischen Eigenschaften des Resonanzkörpers 8 bedingt - durch dessen Resonanzeigenschaft sowie dessen besonders gute Eignung zur Vermeidung vom akustischen Kurzschluß. Die Resonanzeigenschaft des Resonanzkörpers 8 entsprechen dabei in etwa den Eigenschaften eines Rohres oder einer Orgelpfeife. Eine Resonanz (Frequenzerhöhung) ergibt sich bevorzugt bei Schallgeschwindigkeit bei der vierfachen Länge des Schallwegs im Resonanzkörper 8. D.h. Bei der verwendeten Länge L2 von ca. 18 cm ergibt sich die vierfache Länge von ca. 72 cm und mit Hilfe der Schallgeschwindigkeit von 340 m/s ergibt sich daraus die Resonanzfrequenz von ca. 470 Hz (= 340/0,72). Die jeweils in den Figuren 8 und 9 gezeigt Frequenzüberhöhung in den jeweiligen Kurven K3 bzw. K4 in diesem Frequenzbereich um ca. 470 Hz ist auf diesen beschriebenen Effekt zurückzuführen. Die Überhöhung des Frequenzgangs bei ca. 200 Hz und unterhalb von 200 Hz ist auf die Resonanzeigenschaften und weiteren akustischen Eigenschaften, wie Verminderung des akustischen Kurzschlusses, der integrierten Lautsprecheranordnung 2, insbesondere des Lautsprechers 4 und des Resonanzkörpers 8, zurückzuführen.

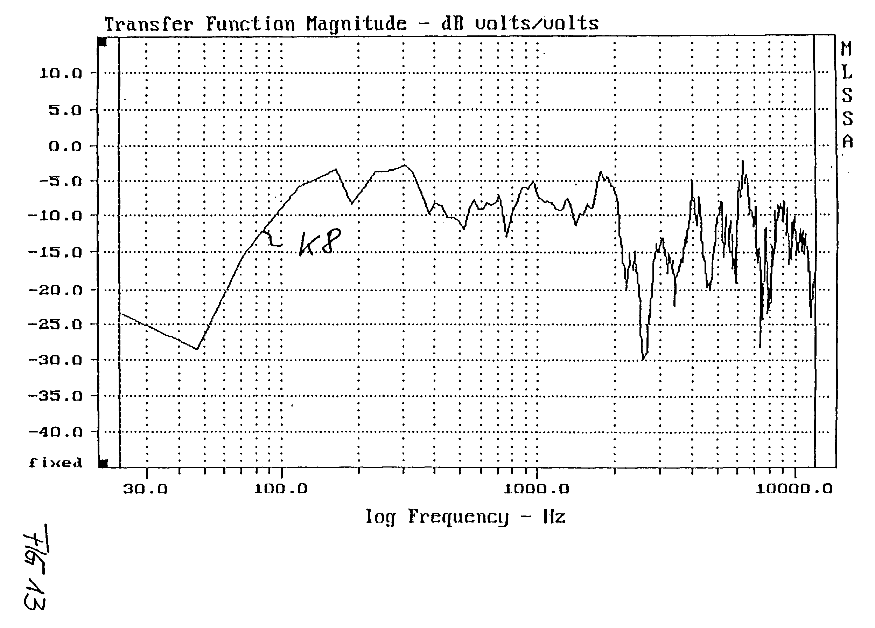

Die Figuren 10 bis 13 zeigen jeweils ein Diagramm mit Kurven K5, K6 bzw. K7 für den Frequenzgang einer integrierten Lautsprecheranordnung 2 mit einem Lautsprecher 4 und jeweils differenziertem Resonanzkörper 8 sowie differenzierter Dämmschicht 18. Die Kurve K5 der Figur 10 beschreibt dabei den Frequenzgang bei einem Resonanzkörper 8 mit einer Länge L2 von ca. 17 cm, wobei die Lautsprecheranordnung 2 mit einem Schaumstoffpolster als Dämmschicht 18 umgeben ist. Das Schaumstoffpolster dient der Vermeidung eines akustischen Kurzschlusses, je nach Art des Lautsprechers 4 - offen oder geschlossen - wirkt das Schaumpolster wie eine halbdurchlässige Box bzw. zusätzlich zur geschlossenen Box dämpfend. Gegenüber der für die Figur 10 eingesetzten Lautsprecheranordnung 2 unterscheidet sich die für die Figur 11 eingesetzte Lautsprecheranordnung 2 lediglich in einer kürzeren Länge L2 des Resonanzkörpers 8 von ca. 14 cm. Bei der Figur 12 ist die Lautsprecheranordnung 2 die gleiche wie bei Figur 11, zusätzlich ist der Resonanzkörper 8 in etwa über seine halbe Länge L2 mit Dämmmaterial, z.B. Wolle, gefüllt. Die Unterschiede bei allen drei Kurven K5 bis K7 der Figuren 10 bis 12 ist im wesentlichen Frequenzbereich nur sehr gering, d.h. der Gewinn bzw. Verlust beträgt weniger als 5 dB. Der Vorteil der kürzeren Länge L2 des Resonanzkörpers 8 gemäß Figuren 11 und 12 überwiegt dabei, da somit eine besonders kompakte Ausführung der Lautsprecheranordnung 2 und somit der Einbau in die Kopfstütze 1 ermöglicht ist. Die Füllung des Resonanzkörpers 8 mit Dämmmaterial führt zu einem weitestgehend ausgeglichenen Frequenzverlauf.

Die Kurve K8 der Figur 13 beschreibt den Frequenzgang für eine bevorzugte Ausführungsform der Lautsprecheranordnung 2 mit einer Länge L2 von ca. 14 cm für den Resonanzkörper 8 und in etwa halber Befüllung des Resonanzkörpers 8 mit Dämmmaterial. Diese Lautsprecheranordnung 2 ist dabei für einen Frequenzbereich von ca. 100 Hz bis ca. 2 kHz, insbesondere für den Frequenzbereich von ca. 100 bis 500 Hz, einsetzbar.

## Patentansprüche

1. Kopfstütze (1) für ein Fahrzeug mit einer integrierten Lautsprecheranordnung (2) mit wenigstens einem Lautsprecher (4).

2. Kopfstütze (1) nach Anspruch 1, bei der an der Schallaustrittsöffnung (6) des Lautsprechers (4) ein Resonanzkörper (8) angeordnet ist.

3. Kopfstütze (1) nach Anspruch 1 oder 2, bei der der Resonanzkörper (8) innenberippt ist.

4. Kopfstütze (1) nach einem der Ansprüche 1 bis 3, bei der der Resonanzkörper (8) in Form eines Horns ausgeführt ist.

5. Kopfstütze (1) nach einem der Ansprüche 1 bis 4, bei der der Resonanzkörper (8) im wesentlichen einen schmalen Querschnitt aufweist.

6. Kopfstütze (1) nach einem der Ansprüche 1 bis 5, bei der der Resonanzkörper (8) in mindestens zwei Raumbereiche (8a, 8b) unterteilt ist, wobei der unmittelbar an den Lautsprecher anschließende Raumbereich (8a) konisch in Schallrichtung im Querschnitt abnimmt.

7. Kopfstütze (1) nach Anspruch 6, bei der in den beiden Raumbereichen (8a, 8b) die jeweilige Anzahl der Innenrippen (20) variiert.

8. Kopfstütze (1) nach einem der Ansprüche 1 bis 7, bei der der Resonanzkörper (8) eine Länge (L2) von weniger als 18 cm aufweist.

9. Kopfstütze (1) nach einem der Ansprüche 1 bis 8, bei der der Resonanzkörper (8) eine Breite (B2) von weniger als 19 cm aufweist.

10. Kopfstütze (1) nach einem der Ansprüche 1 bis 9, bei der der Resonanzkörper (8) im Querschnitt eine Breite (b1) seiner Schalleintrittsöffnung (9) von weniger als 6 cm und an seiner Schallaustrittsöffnung (10) eine Breite (b2) von weniger als 2 cm aufweist.

11. Kopfstütze (1) nach einem der Ansprüche 1 bis 10, bei der die Lautsprecheranordnung (2) an Stützen (12) der Kopfstütze (1) befestigt ist.

12. Kopfstütze (1) nach Anspruch 11, bei der die Lautsprecheranordnung (2) mittels einer Platte (14) an den Stützen (12) befestigt ist.

13. Kopfstütze (1) nach einem der Ansprüche 1 bis 12, bei der als Lautsprecher (4) ein offener Lautsprecher vorgesehen ist.

14. Kopfstütze (1) nach einem der Ansprüche 1 bis 13, bei der als Lautsprecher (4) ein Kolbenlautsprecher vorgesehen ist.

15. Kopfstütze (1) nach einem der Ansprüche 1 bis 14, bei der die Lautsprecheranordnung (2) zumindest teilweise von einer Dämmschicht (18) umgeben ist.

16. Kopfstütze (1) nach einem der Ansprüche 1 bis 15, bei der die Lautsprecheranordnung (2) zur Benutzung im Frequenzbereich von ca. 100 Hz bis ca. 500 Hz vorgesehen ist.

17. Kopfstütze (1) nach einem der Ansprüche 1 bis 16, bei der der Resonanzkörper (8) derart ausgelegt ist, daß eine Resonanz bei der Frequenz auftritt, die der vierfachen Länge des Schallwegs im Resonanzkörper (8) entspricht.

18. Kopfstütze (1) nach einem der Ansprüche 1 bis 17, bei der eine Schallüberhöhung unterhalb von 400 Hz auftritt.

19. Fahrzeugsitz mit einer Kopfstütze (1) nach einem der Ansprüche 1 bis 18.

20. Fahrzeug mit einer Kopfstütze (1) nach einem der Ansprüche 1 bis 18.
